# EUROPEAN PATENT APPLICATION

(11) **EP 4 838 318 A1**
(43) Date of publication of application: **11.11.2026**
(21) Application number: 26175031.9
(22) Date of filing: 28.04.2026
(51) Int. Cl.: G05B 19/042, G05B 13/02

(54) **SYSTEMS AND METHODS FOR IDENTIFYING AND CONTROLLING OPERATIONAL TARGETS**

(30) Priority: 02.05.2025 US 202519197400
(71) Applicant: Rockwell Automation Technologies, Inc., Mayfield Heights, OH 44124 (US)
(72) Inventor: SayyarRodsari, Bijan, Mayfield Heights, OH, 44124 (US); Gupta, Shashank, Mayfield Heights, OH, 44124 (US); Machineni, Rakesh Chowdary, Mayfield Heights, OH, 44124 (US)
(74) Representative: Grünecker Patent- und Rechtsanwälte PartG mbB

(57) **Abstract**

A method that includes receiving visual data, process data, and production parameters indicative of operation of industrial automation equipment, performing feature extraction of the visual data, the process data, and the production parameters to generate a plurality of features and generating a feature space including a subset of the plurality of features. The method also includes building a causal model representing operation of industrial automation equipment within the feature space, wherein the causal model comprises one or more causal dependencies between one or more variables of the subset of the plurality of features and controlling operation of the industrial automation equipment based on the causal dependencies of the causal model.

## Description

### BACKGROUND

The present disclosure generally relates to condition monitoring systems and, more particularly, to condition monitoring systems for predicting changes in processes and functions of industrial operations.

Generally, a control system may be incorporated into industrial operations to monitor automation processes and functions to determine if industrial operations are proceeding as desired. The control system may be used to correct and/or flag industrial operations that vary from standard protocols. Such control may prevent large-scale deviations of industrial operations from standard protocols. Previously available control systems may monitor changes in data collected from associated equipment, sensor feedback, user observations, or a combination thereof. While monitoring changes in collected data may be used to control large-scale deviations from standard protocols, such response based on changes to collected data may lead to unanticipated changes to production quality, consistency, and the like. That is, changes in a particular process within industrial operations may impact resulting products due to interrelationships between various processes within industrial operations. As such, new techniques for identifying interrelationships between the various processes within industrial operations are needed to enable control of production quality and consistency.

This section is intended to introduce the reader to various aspects of art that may be related to various aspects of the present techniques, which are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

### BRIEF DESCRIPTION

A summary of certain embodiments disclosed herein is set forth below. It should be understood that these aspects are presented merely to provide the reader with a brief summary of these certain embodiments and that these aspects are not intended to limit the scope of this disclosure. Indeed, this disclosure may encompass a variety of aspects that may not be set forth below.

In one embodiment, the present disclosure relates to a method that includes receiving visual data, process data, and production parameters indicative of operation of industrial automation equipment, performing feature extraction of the visual data, the process data, and the production parameters to generate a plurality of features and generating a feature space including a subset of the plurality of features. The method also includes building a causal model representing operation of industrial automation equipment within the feature space, wherein the causal model comprises one or more causal dependencies between one or more variables of the subset of the plurality of features and controlling operation of the industrial automation equipment based on the causal dependencies of the causal model.

In one embodiment, present disclosure relates to a system including one or more cameras configured to capture visual data associated with operations of industrial automation equipment, a processing circuitry, and a memory, accessible by the processing circuitry. The memory storing instructions when executed by the processing circuitry cause the processing circuitry to perform operations including receiving visual data, process data, and production parameters indicative of operation of industrial automation equipment, performing feature extraction of the visual data, the process data, and the production parameters to generate a plurality of features and generating a feature space including a subset of the plurality of features. The operations also include building a causal model representing operation of industrial automation equipment within the feature space, wherein the causal model comprises one or more causal dependencies between one or more variables of the subset of the plurality of features and controlling operation of the industrial automation equipment based on the causal dependencies of the causal model.

In one embodiment, the present disclosure relates to a non-transitory computer-readable medium comprising computer-executable instructions that, when executed, are configured to cause a processor to perform operations including receiving visual data, process data, and production parameters indicative of operation of industrial automation equipment, performing feature extraction of the visual data, the process data, and the production parameters to generate a plurality of features and generating a feature space including a subset of the plurality of features. The operations also include building a causal model representing operation of industrial automation equipment within the feature space, wherein the causal model comprises one or more causal dependencies between one or more variables of the subset of the plurality of features and receiving a target product operation of industrial automation equipment, using the causal model to predict one or more changes in operation of the industrial automation equipment impact the target product, and controlling operation of the industrial automation equipment based on the causal dependencies of the causal model.

### BRIEF DESCRIPTION OF DRAWINGS

These and other features, aspects, and advantages of the present disclosure will become better understood when the following detailed description is read with reference to the accompanying drawings in which like characters represent like parts throughout the drawings, wherein:
FIG. 1 illustrates an example of an industrial automation system employed by a food manufacturer, in accordance with aspects of the present techniques;
FIG. 2 illustrates a diagrammatical representation of an exemplary control system and a multimodal monitoring system that may be employed in any suitable industrial automation system, in accordance with aspects of the present techniques;
FIG. 3 is a flow diagram of a process to generate a multimodal feature space, in accordance with aspects of the present techniques;
FIG. 4 is a flow diagram of a process to generate a causal graph and an associated causal model, in accordance with aspects of the present techniques;
FIG. 5 is a flow diagram of a process of perturbing a causal model to determine one or more causal effects on the causal model, in accordance with aspects of the present techniques; and
FIG. 6 is a schematic embodiment of a graphical user interface (GUI) generated within the multimodal monitoring system of FIG. 2, in accordance with aspects of the present techniques.

### DETAILED DESCRIPTION

One or more specific embodiments of the present disclosure will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," "the," and "said" are intended to mean that there are one or more of the elements. The terms "comprising," "including," and "having" are intended to be inclusive and mean that there may be additional elements other than the listed elements.

In addition, as used herein, the terms "real time", "real-time", or "near real time" may be used interchangeably and are intended to describe operations (e.g., computing operations) that are performed without any human-perceivable interruption between operations. For example, as used herein, data relating to the systems described herein may be collected, transmitted, and/or used in control computations in "near real time" such that data readings, data transfers, and/or data processing steps occur once every second, once every 0.1 second, once every 0.01 second, or even more frequent, during operations of the systems (e.g., while the systems are operating).

As discussed above, control systems may be incorporated into industrial operations to monitor automation processes and functions to determine if industrial operations are proceeding as desired and may be used to correct industrial operations that vary from standard protocols or expected operation. Certain conventional technologies may use control systems to monitor industrial operations based on changes in process data. As such, conventional control systems may respond in an reactionary manner as opposed to changing operations based on predicted changes in operations. Accordingly, new techniques for identifying interrelationships between the various processes within industrial operations are needed to enable control of production quality and consistency.

Accordingly, a multimodal monitoring system is disclosed herein that provides predictive monitoring and control functionality for processes and functions of industrial operations. Techniques are described herein relate to generating a multimodal feature space, identifying one or more causal relationships between one or more controllable processes, and controlling industrial operations of the enterprise based on the causal relationships to produce a target behavior of an industrial operation. As referred to herein, the "target behavior" may include operational parameters of various components of an industrial automation system that enable production of, result in the formation of, or otherwise affect a target product (e.g., a condition of the target product). For example, the condition of the target product may be characterized based on its form and/or function (e.g., size, shape, morphology, color, etc.) As such, the target behavior may be characterized based on one or more relationships of multimodal data including visual data (e.g., vision as a sensor). For example, the multimodal data may include features extracted from the visual data (e.g., video data, camera data) in addition to production parameters (e.g. production set points such as pressure, temperature, time, speed, etc.), process data (e.g., drive data, vibration data, current data, spectral data, quality data), and the like. The process data may include data measured by sensors whether directly (e.g., a thermocouple measuring a temperature) or indirectly (e.g., an electric current sensor measures current applied to a motor that can be correlated to a speed of a conveyor belt driven by the motor). The industrial automation system may include a plurality of industrial operations resulting in production of the target product. As such, the relationships between the multimodal may be complex. With this in mind, a causal model is generated to predict the one or more relationships between the operational parameters and the target product. The causal model may identify the target behavior of the industrial automation system based on causal relationships.

The multimodal monitoring system uses one or more features of the visual data as a portion of the multimodal data used to form the causal model. The features may be extracted using a feature extraction engine. The feature extraction engine of the multimodal monitoring system may extract the features using artificial intelligence (AI) technologies including vision (e.g., visual data) as a sensor. The features identified by the AI technologies (e.g., neural networks, machine learning) include features that are non-obvious to operational users. The feature extraction engine may include an unsupervised model configured to process unlabeled visual data. The features extracted by the feature extraction engine may be provided to a causal inference engine for use in generating a multimodal feature space and a causal model. The feature extraction engine may dynamically select features from the visual data to enable an adaptive and optimization-based protocol that may receive feedback from the causal inference engine. The feedback of the causal inference engine may provide instructions to the feature extraction model to improve feature selection to improve modeling of relationships impacting the target behavior.

In some embodiments, the features extracted from the visual data collected during industrial operations are used as a portion of the multimodal data used as an input into the causal inference engine. The input may also include process data, production parameters, one or more additional data inputs, or a combination thereof. The causal inference engine may build a multimodal feature space in which to form a causal model to probe or otherwise determine causal relationships of the industrial automation system using AI technologies. Such AI technologies may include neural networks, machine learning, and the like. The multimodal feature space may include a subset of extracted features of the multimodal data with reduced dimensionality. As such, the multimodal feature space may include sufficient data to meet or exceed one or more performance metrics while providing improved computational efficiency through optimization of feature space. In this manner, the causal inference engine may apply a causal model to the multimodal feature space providing an initial feature space in which to generate a causal graph to determine one or more patterns between variables of the multimodal data to determine one or more causal dependencies. Determining the causal dependencies between the variables of the multimodal data may provide information associated with how changes in one or more variables may impact the target behavior. In this manner, the causal graph and associated causal model may be used to predict how changes in the multimodal data may impact the target behavior by identifying one or more complex relationships between operational parameters and the target product not perceivable by direct data comparison by operational users.

In certain embodiments, the causal inference engine of the multimodal monitoring system may receive a starting point to base formation of the causal graph. The starting point may be based on one or more known relationships of the industrial automation system. For example, the starting point may be based on first principles reflective of the known relationships between process data, production parameters, and the like of industrial automation equipment. In some instances, known relationships may reflect physical laws such as heat transfer relationships, energy balance, mass balance, and/or one or more additional relationship. In this manner, the causal inference engine may be directed to initially explore a constrained number or relationships as opposed to making assumptions leading to using computational bandwidth to explore relationships beyond physical operational parameters of the industrial automation system. In some embodiments, one or more causal dependencies output by the causal graph may be further constrained based on one or more additional known relationships. In this manner, the causal graph may be tailored to a particular industrial automation system. The additional known relationships may be used to modify a weight of the causal dependencies within the causal graph such that causal impacts of particular features are rewarded to accelerate learning of the causal graph in representing impacts of changes to variables with the particular industrial automation system.

In some embodiments, causal effects of the causal dependencies represented by the causal graph and associated causal model may be perturbed by applying one or more anticipated change in operation of the industrial automation system. The causal effects of one or more perturbations may be analyzed and reinforcement of the causal model may be performed by the causal inference engine to strength causal relationships between the features of the multimodal data modeled by the causal graph. Systemic perturbation of variables of the multimodal data may be used to feed information back to the causal model to improve an understanding of a topography of a system. Such improvement may strengthen prediction of impacts of changes in the industrial automation system on generation of the target product. As such, the multimodal monitoring system described herein may improve operational efficiency of the industrial automation system through identification of target behaviors of industrial operations that result in production of desired products. Such identification may be improved by generating a multimodal feature space, providing a starting point for causal graph formation, and further constraining and reinforcing weights of variables of the causal graph (e.g., directed graph) to predict the one or more relationships between the operational parameters and the target product with improved computational efficiency.

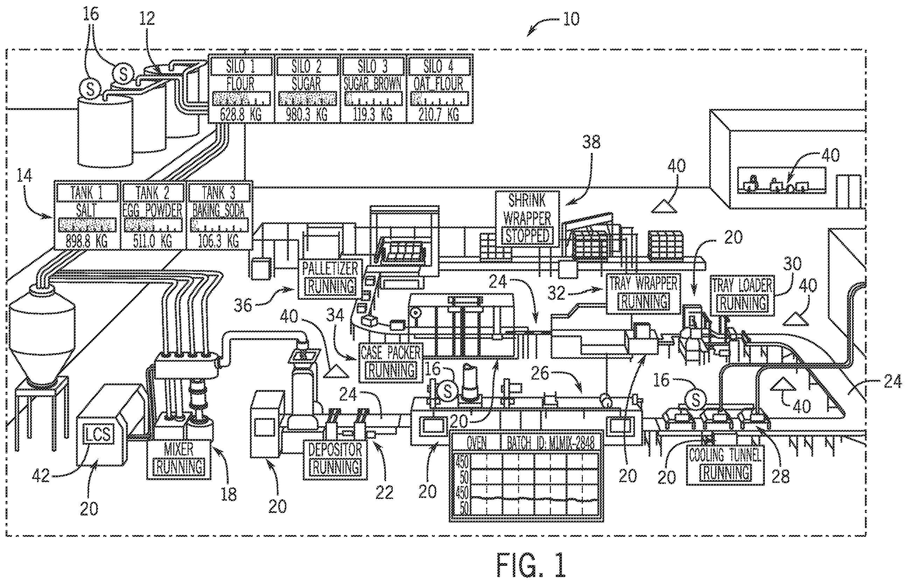

By way of introduction, FIG. 1 illustrates an example of an industrial automation system 10 employed by a food manufacturer. The present embodiments described herein may be implemented using the various devices illustrated in the industrial automation system 10 described below. However, it should be noted that although the example industrial automation system 10 of FIG. 1 is directed at a food manufacturer, the present embodiments described herein may be employed within any suitable industry, such as automotive, mining, hydrocarbon production, manufacturing, and the like. The following brief description of the example industrial automation system 10 employed by the food manufacturer is provided herein to help facilitate a more comprehensive understanding of how the embodiments described herein may be applied to industrial devices to significantly improve the operations of the respective industrial automation system. As such, the embodiments described herein should not be limited to be applied to the example depicted in FIG. 1.

Referring now to FIG. 1, the example industrial automation system 10 for a food manufacturer may include silos 12 and tanks 14. The silos 12 and the tanks 14 may store different types of raw material, such as grains, salt, yeast, sweeteners, flavoring agents, coloring agents, vitamins, minerals, and preservatives. In some embodiments, sensors 16 may be positioned within or around the silos 12, the tanks 14, or other suitable locations within the industrial automation system 10 to measure process data and/or certain properties of the environment where the industrial automation system 10 is operating, such as temperature, mass, volume, pressure, humidity, and the like.

The raw materials may be provided to a mixer 18, which may mix the raw materials together according to a specified ratio. The mixer 18 and other machines in the industrial automation system 10 may employ certain industrial automation devices 20 to control the operations of the mixer 18 and other machines. The industrial automation devices 20 may include controllers, input/output (I/O) modules, motor control centers, motors, human machine interfaces (HMIs), operator interfaces, contactors, starters, sensors 16, actuators, conveyors, drives, relays, protection devices, switchgear, compressors, sensor, actuator, firewall, network switches (e.g., Ethernet switches, modular-managed, fixed-managed, service-router, industrial, unmanaged, etc.) and the like.

The mixer 18 may provide a mixed compound to a depositor 22, which may deposit a certain amount of the mixed compound onto conveyor 24. The depositor 22 may deposit the mixed compound on the conveyor 24 according to a shape and amount that may be specified to a control system for the depositor 22. The conveyor 24 may be any suitable conveyor system that transports items to various types of machinery across the industrial automation system 10. For example, the conveyor 24 may transport deposited material from the depositor 22 to an oven 26, which may bake the deposited material. The baked material may be transported to a cooling tunnel 28 to cool the baked material, such that the cooled material may be transported to a tray loader 30 via the conveyor 24. The tray loader 30 may include machinery that receives a certain amount of the cooled material for packaging. By way of example, the tray loader 30 may receive 25 ounces of the cooled material, which may correspond to an amount of cereal provided in a cereal box.

A tray wrapper 32 may receive a collected amount of cooled material from the tray loader 30 into a bag, which may be sealed. The tray wrapper 32 may receive the collected amount of cooled material in a bag and seal the bag using appropriate machinery. The conveyor 24 may transport the bagged material to case packer 34, which may package the bagged material into a box. The boxes may be transported to a palletizer 36, which may stack a certain number of boxes on a pallet that may be lifted using a forklift or the like. The stacked boxes may then be transported to a shrink wrapper 38, which may wrap the stacked boxes with shrink-wrap to keep the stacked boxes together while on the pallet. The shrink-wrapped boxes may then be transported to storage or the like via a forklift or other suitable transport vehicle.

To perform the operations of each of the devices in the example industrial automation system 10, the industrial automation devices 20 may provide power to the machinery used to perform certain tasks, provide protection to the machinery from electrical surges, prevent injuries from occurring with human operators in the industrial automation system 10, monitor the operations of the respective device, communicate data regarding the respective device to a supervisory control system 40, and the like. In some embodiments, each industrial automation device 20 or a group of industrial automation devices 20 may be controlled using a local control system 42. The local control system 42 may receive data from a condition monitoring system regarding the operation of the respective industrial automation device 20, other industrial automation devices 20, user inputs, and other suitable inputs to control the operations of the respective industrial automation device(s) 20.

The one or more sensors 16 may be any number of devices adapted to provide process data (e.g., information regarding process conditions), historical data, and the like. The sensors 16 may be utilized to operate the industrial automation equipment of the industrial automation system 10 in real time and/or over a predetermined time. Indeed, process data may be utilized within process loops that are monitored and controlled by a condition monitoring system and/or an HMI. Such a process loop may be activated based on the process data (e.g., input from a sensor 16) or direct operator input received through the HMI. The sensors 16 and one or more actuators are in communication with the HMI 52 and the industrial automation equipment. Further, the sensors 16 and actuators may receive power from one or more additional attached modules.

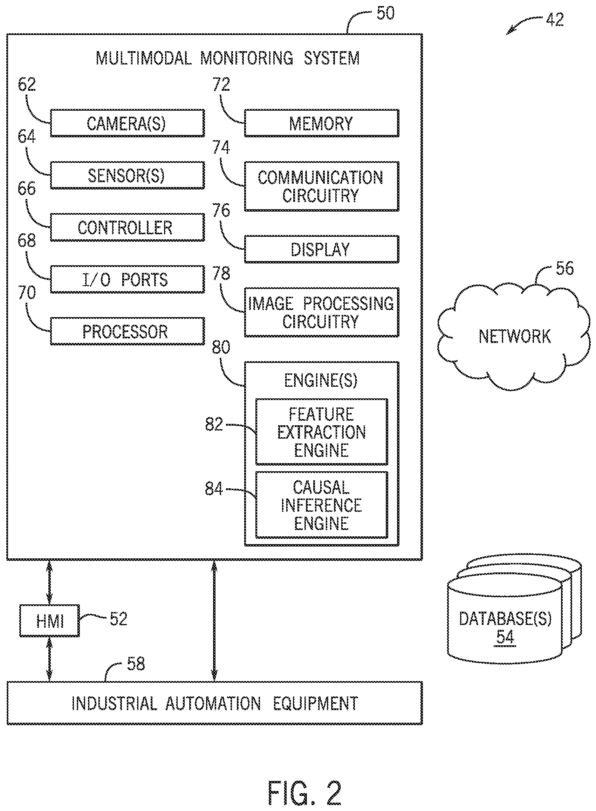

FIG. 2 illustrates a diagrammatical representation of an exemplary local control system 42 including a multimodal monitoring system 50 that may be employed in any suitable industrial automation system 10, in accordance with embodiments presented herein. In FIG. 2, the local control system 42 is illustrated as including the multimodal monitoring system 50, a human machine interface (HMI) 52, one or more databases 54, and a network 56. The local control system 42 is adapted to interface with devices that may monitor and control various types of industrial automation equipment 58. By way of example, the industrial automation equipment 58 may include the mixer 18, the depositor 22, the conveyor 24, the oven 26, other pieces of machinery described in FIG. 1, or any other suitable equipment.

In certain embodiments, one or more properties of the industrial automation equipment 58 may be monitored and controlled by certain equipment for regulating control variables used to operate the industrial automation equipment 58. For example, the sensors 16 shown in FIG. 1 may monitor various properties of the industrial automation equipment 58 and may provide data to the local control system 42, which may adjust operations of the industrial automation equipment 58, respectively. In some cases, the industrial automation equipment 58 may be associated with devices used by other equipment. For instance, scanners, gauges, valves, flow meters, and the like may be disposed on industrial automation equipment 58. Here, the industrial automation equipment 58 may receive data from the associated devices and use the data to perform their respective operations more efficiently. For example, a controller of a motor drive may receive data regarding a temperature of a connected motor and may adjust operations of the motor drive based on the data.

As discussed above, the industrial automation equipment 58 may take many forms and include devices for accomplishing many different and varied purposes. For example, the industrial automation equipment 58 may include machinery used to perform various operations in a compressor station, an oil refinery, a batch operation for making food items, a mechanized assembly line, and so forth. Accordingly, the industrial automation equipment 58 may comprise a variety of operational components, such as electric motors, valves, actuators, temperature elements, pressure sensors, or a myriad of machinery or devices used for manufacturing, processing, material handling, and other applications.

Additionally, the industrial automation equipment 58 may include various types of equipment that may be used to perform the various operations that may be part of an industrial application. For instance, the industrial automation equipment 58 may include electrical equipment, hydraulic equipment, compressed air equipment, steam equipment, mechanical tools, protective equipment, refrigeration equipment, power lines, hydraulic lines, steam lines, and the like. Some example types of equipment may include mixers, machine conveyors, tanks, skids, specialized original equipment manufacturer machines, and the like. In addition to the equipment described above, the industrial automation equipment 58 may be made up of certain industrial automation devices 20 of FIG. 1, which may include controllers, input/output (I/O) modules, motor control centers, motors, human machine interfaces (HMIs), operator interfaces, contactors, starters, sensors 16, actuators, drives, relays, protection devices, switchgear, compressors, firewall, network switches (e.g., Ethernet switches, modular-managed, fixed-managed, service-router, industrial, unmanaged, etc.), and the like.

In certain embodiments, the industrial automation equipment 58 may include a communication component that enables the industrial automation equipment 58 to communicate data between the industrial automation equipment 58 and the HMI 52 and/or the multimodal monitoring system 50. The communication component may include a network interface that may enable the industrial automation equipment 58 to communicate via various protocols over the network 56 such as Ethernet/IP^{®}, ControlNet^{®}, DeviceNet^{®}, or any other industrial communication network protocol. Alternatively, the communication component may enable the industrial automation equipment 58 to communicate via various wired or wireless communication protocols, such as Wi-Fi, mobile telecommunications technology (e.g., 2G, 3G, 4G, 5G, LTE), Bluetooth^{®}, near-field communications technology, and the like.

The multimodal monitoring system 50 may include one or more cameras 62, one or more sensors 64, a controller 66, input/output (I/O) ports 68, a processor 70, a memory 72, communication circuitry 74, a display 76, image processing circuitry 78, one or more machine learning engines 80, and the like. The one or more cameras 62 may include infrared cameras, CCD cameras, DSLR cameras, SLR cameras, mirrorless cameras, or one or more digital cameras. The one or more cameras 62 may include complementary metal-oxide-semiconductor (CMOS) cameras, charge-coupled devices (CCD), electron-multiplier charge-coupled devices (EMCCD), InGaAs detectors, one or more photodiodes, pyroelectric sensors, one or more photodetectors, and/or other suitable detectors. The cameras 62 may capture visual data in one or more regions of the electromagnetic spectrum. For example, the cameras 62 may include capture visual data in the ultraviolet region, the visible region, and/or the infrared region (IR) (e.g., short wave, mid wave, and/or long wave IR). The cameras 62 may collect visual data ranging from 157 nm to 220 nm, 200 nm to 400 nm, 400 nm to 600 nm, 480 nm to 880 nm, 880 nm to 1800 nm, 2000 to 3000 nm, 3000 to 5000 nm, and/or 8000 to 14000 nm. The cameras 62 may collect visual data. The visual data may include video data (e.g., digital representation of moving images and/or audio), image data (e.g., digital representation of one or more static images), or a combination thereof. The visual data may be analyzed and may be enable use of vision as sensor. The visual data may be analyzed to extract features that are non-obvious to operational users. In some embodiments, AI technologies identify a subset of the features of the visual data to determine operational parameters of the industrial automation equipment 58. In some embodiments, a first camera may be positioned at a first angle and a second camera may be positioned at a second angle to capture video data of industrial automation equipment 58 from various angles. The first camera may be of a first type (e.g., IR camera) and the second camera may be of a second type (e.g., RBG camera). As such, the cameras 62 may capture visual data within various spectral regions to be provided for further analysis by the multimodal monitoring system 50.

The one or more sensors 64 may be any number of devices adapted to provide information regarding operation conditions (e.g., process data and/or production parameters) of the industrial automation equipment 58. The sensors 64 may include one or more temperature sensors, pressure sensors, motion sensors, and the like. The controller 66 may be configured to receive data from the cameras 62 and/or the sensors 64 and control the HMI 52, the industrial automation equipment 58, and/or one or more additional components of the multimodal monitoring system 50.

The I/O ports 68 may be interfaces that may couple to the HMI 52, the industrial automation equipment 58, other peripheral components such as input devices (e.g., keyboard, mouse), sensors, input/output (I/O) modules, and the like. The communication circuitry 74 may facilitate wired or wireless communication between various components of the multimodal monitoring system 50 as well as with external devices (e.g., mobile device, HMIs, etc.). The processor 70 may be any suitable type of computer processor or microprocessor capable of executing computer-executable code. Moreover, the processor 70 may include multiple microprocessors, one or more "general-purpose" microprocessors, one or more special-purpose microprocessors, and/or one or more application specific integrated circuits (ASICs), or some combination thereof. For example, the processor 70 may include one or more than one reduced instruction set (RISC) or complex instruction set (CISC) processors.

The memory 72 of the multimodal monitoring system 50 may also be used to store the data, various other software applications, and the like that are executed by the processor 70. The memory 72 may represent non-transitory computer-readable media (e.g., any suitable form of memory or storage) that may store the processor-executable code used by the processor 70 to perform various techniques described herein. The processor 70 may be configured to execute instructions. The instructions, when executed by the processor 70, may enable the multimodal monitoring system 50 to control the cameras 62 and/or the sensors 64 to provide data for feature extraction. The multimodal monitoring system 50 may include the display 76 that is configured to display text or images transferred to it from the processor 70. In addition to and/or alternative to the display 76 may include other devices for interfacing with a user, such as lights (e.g., LEDs), speakers, and the like.

The multimodal monitoring system 50 may include visual data prepared by image processing circuitry 78 (e.g., image processing circuitry within the processor 70) or uncompensated video data. The image processing circuitry 78 may work in combination with the engines 80 to analyze data used to monitor operation of the industrial automation equipment 58. In some embodiments, the image processing circuitry 78 may preprocess visual data generated by the cameras 62. Preprocessing may include cropping, rotating, applying one or more masks, and the like to the visual data. The engines 80 may include a feature extraction engine 82, a causal inference engine 84, and/or one or more additional engines. The engines 80 may use AI technologies including neural networks, machine learning models, and the like. The engines 80 may use various AI based algorithms to analyze vide data obtained from the cameras 62, the sensors 16, 64, and the like. The engines 80 may utilize one or more predictive models for analysis of the video data, process data, and the like. Various types of predictive models may be used to analyze data from variety of resources and generate predictive outputs. The engines 80 may include various types of artificial neural networks (ANN), such as Convolution Neural Networks (CNN), Recurrent Neural Networks (RNN), etc. The multimodal monitoring system 50 may also communicate with the databases 54, which may store information associated with the sensors 16, related process data, and the like.

In some embodiments, the feature extraction engine 82 may be trained with an unsupervised machine learning technique, i.e., a predictive model is trained with training data that includes input data (e.g., unlabeled dataset). In some instances, the feature extraction engine 82 may be trained with a partially unsupervised machine learning technique, i.e., a predictive model is trained with training data that includes input data with a first portion without desired predictive output (e.g., unlabeled dataset) and a second portion with desired predictive output (e.g., labeled dataset). The feature extraction engine 82 may use the unsupervised model to process unlabeled visual data, unlabeled process data, unlabeled historical data, and the like. The feature extraction engine 82 may use principal component analysis (PCA), kernel PCA, linear discriminant analysis (LDA), generalized discriminant analysis (GRA), T-distributed stochastic neighbor embedding (t-SNE), non-negative matrix factorization (NMF), and the like. For example, the feature extraction engine 82 may receive unlabeled visual data from the cameras 62. The feature extraction engine 82 may filter the unlabeled visual data using one or more filters. The filters may be used to convert the unlabeled visual data into gray scale, generate a depth map for the visual data, and the like. The feature extraction engine 82 may perform vectorization of the visual data, apply one or more transformers, and the like.

The feature extraction engine 82 may extract one or more features from the visual data associated with specific operations of the industrial automation equipment 58 to generate visual data with reduced dimensionality. For example, the feature extraction engine 82 may include an unsupervised model configured to process unlabeled video data, unlabeled process data, unlabeled historical data, and the like. For example, the feature extraction engine 82 may identify a variety of features associated with temporal features, one or more spatial features, or a combination thereof extracted from visual data collected by the cameras 62. The features extracted by the feature extraction engine 82 may include a portion of multimodal data provided to the causal inference engine 84 of the multimodal monitoring system 50. The multimodal data may also include process data, production parameters, and the like. For example, the multimodal data may include an array data in addition to the extracted features from the visual data.

In some embodiments, the multimodal monitoring system 50 may transform the extracted features of the visual data and one or more features of the array data into one or more feature types. The feature types may include a type of data structure such as categorical, numerical, and the like.. In this manner, the features of the multimodal data (e.g., features extracted from visual data, process data, production parameters, and the like) may include one or more particular feature types to streamline computational efficiency of generating causal models. Additionally and/or alternatively, the multimodal monitoring system 50 may perform time synchronization of the extracted features from the multimodal data to associate various inputs (e.g., visual data, process data, production parameters) of the industrial automation equipment 58 in time. Such time synchronization may improve prediction of causal relationships between variables of the multimodal data. It should be noted, time synchronization is one example of feature scaling and one or more additional variables of the multimodal data may be used to rescale and/or normalize values of the multimodal data for further processing by the causal inference engine 84.

In some embodiments, the causal inference engine 84 of the multimodal monitoring system 50 may be used to form a feature space in which to apply a causal graph and an associated causal model. The causal inference engine 84 may use AI technologies such as causal inference, fault tree analysis, perturbation analysis, and the like. It should be noted, in some embodiments, the causal inference engine 84 may use algorithmic complexity in a generative way to perform causal deconvolution beyond statistical causal relationships. The feature space (e.g., multimodal feature space) may be defined using a subset of variables of the multimodal data. The feature space may be an abstract, n-dimensional space including a number of points, wherein the dimension of the feature space is determined by the number of variables used to describe the multimodal data. The feature space may be optimized by the causal inference engine 84 to simplify data used to build the causal graph and improve computation efficiency. The subset of the variables of the multimodal data may be processed to reduce dimensionality to reduce a data size of the multimodal data. Optimization of the feature space may be performed by the causal inference engine 84 by iteratively validating the feature space and updating the feature space based on comparison to one or more performance metrics. The performance metrics may include correlation based metrics (e.g., Pearson correlations, Spearman Rank correlations, etc.), distance metrics (e.g., Euclidean distance, cosine similarities), and the like (e.g., chi-square test, reduction metrics, information gain, etc.). The causal inference engine 84 may output the feature space meeting or exceeding the performance metrics as a validated multimodal feature space.

The causal inference engine 84 of the multimodal monitoring system 50 may build the causal graph and the associated causal model using the validated multimodal feature space. The causal graph is a directed graph that may display one or more causal dependencies (e.g., causal relationships) between variables of the multimodal data. The causal graph may include the variables of the multimodal data as one or more nodes. Each node is connected by an arrow to one or more additional nodes. The arrow (e.g., direction dependent) illustrates which variables of the multimodal data a particular variable has a causal impact (e.g., causal influence). Causal dependencies represented within the causal graph may be reinforced by changing a weight of the causal graph by perturbing the causal model based on one or more anticipated changes in operation of the industrial automation equipment 58. Such perturbations may be used in training the causal graph to strengthen causal relationships between the features of the multimodal data modeled by the causal graph. Systemic perturbation of variables of the multimodal data may be used to feed information back to the causal model to iteratively train the causal graph and the associated causal model to predict impacts of changes in operations the industrial automation equipment 58. In this manner, the causal model may be used to understand relationships of the multimodal data to predict changes in formation of a target product of the industrial automation equipment 58. Such predictions in changes to the target product may be used to determine industrial operation interdependencies.

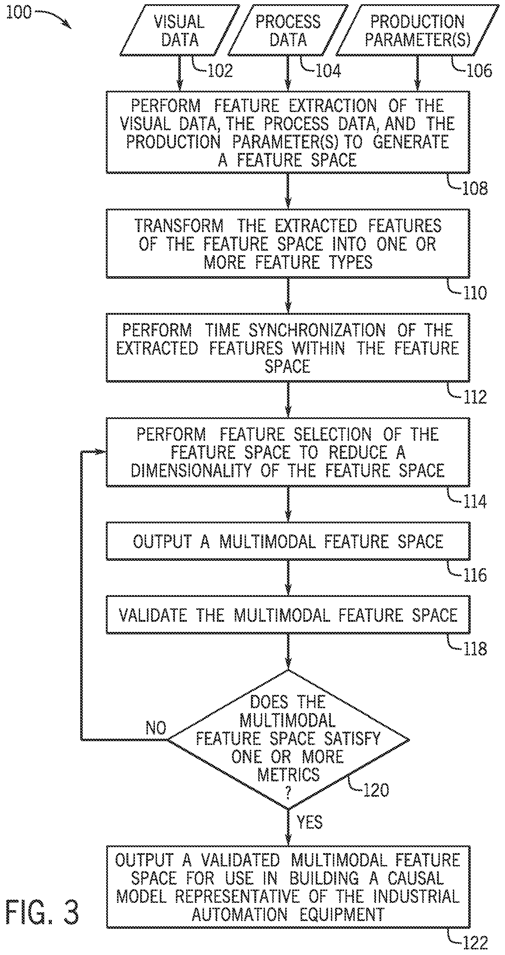

FIG. 3 is a flow diagram of an example process 100 to generate a multimodal feature space, in accordance with aspects of the present techniques. The multimodal feature space may be formed based on extracting a subset of features from visual data 102, process data 104, one or more production parameters 106, one or more additional sources of data, or a combination thereof. Certain blocks of the process 100 may be performed by one or more of the engines 80 (e.g., the feature extraction engine 82 and/or the causal inference engine 84) of the multimodal monitoring system 50, a computing device and/or a HMI 52 disclosed above with reference to FIG. 1 and FIG. 2 or any other suitable computing device(s) or controller(s). Furthermore, the blocks of the process 100 may be performed in the order disclosed herein or in any suitable order. For example, certain blocks of the process 100 may be performed concurrently. In addition, in certain embodiments, at least one of the blocks of the process 100 may be omitted.

At block 108 of the process 100, the multimodal monitoring system 50 may receive the visual data 102, the process data 104, and the production parameters 106 and may perform feature extraction of the visual data 102, the process data 104, and the production parameters 106 to generate a feature space. In some embodiments, feature extraction of the visual data 102 may be performed by the feature extraction engine 82. The visual data 102 may be generated by the cameras 62 of the multimodal monitoring system 50. The visual data 102 may include preprocessed video data (e.g., crop, rotate, mask, and the like). The feature extraction engine 82 may include an unsupervised machine learning model that may be used to extract features from unlabeled visual data (e.g., the visual data 102). The features extraction engine 82 may be used to perform dimensionality reduction while maintaining features of the visual data associated with operation of the industrial automation equipment 58. As such, the feature extraction engine 82 may process the visual data 104 to remove one or more redundant features, noise, and the like.

In some embodiments, the feature extraction engine 82 may determine the subset of the extracted features associated with one or more key operations of the industrial automation equipment 58. The subset of extracted features may include one or more temporal features (features changing in time), one or more spatial features (features changing in space, i.e., size of an object), and the like. In some embodiments, the feature extraction engine 82 may update the extracted features identified as associated with the change in operating conditions. For example, a change in an operational parameter of a particular piece of equipment may impact the extracted features identified by the feature extraction engine 82. Additionally and/or alternatively, one or more of the extracted features may be modified and/or updated based on impacts on causal dependencies between one or more variables used to determine an impact on a change in operation on production of a target product. As such, the feature extraction engine 82 may dynamically provide updates to feature extraction and reduction of dimensionality of the visual data.

The feature extraction engine 82 of the multimodal monitoring system 50 may extract one or more additional features from the process data 104 and/or the production parameters 106. The feature extraction engine 82 may transform raw data (e.g., the process data 104 and/or the production parameters 106) into relevant information for use by the multimodal monitoring system 50. For example, the additional features may include transformed data extracted from data collected by the sensors 16 (e.g., an electronic data sensor, a temperature sensor, a vibration sensor and/or one or more actuators) of FIG. 1. For example, the additional features may include transformations of any suitable type of measurement or control setting related to operating the industrial automation equipment 58, such as temperature, flow rate, electrical power, operating speed, a mass, a volume, a type of material being processed, a pressure, a humidity level, a voltage, vibrational data, electrical data, acoustic data, and the like.

The feature extraction engine 82 may output the extracted features of the visual data 102, the process data 104, and/or the production parameters 106 as a feature space. The feature space may be defined as a mathematical space in which one or more data points are represented as vectors, with each dimension representing a particular feature. As such, the feature space may represent features from several data collection sources (e.g., cameras, sensors, and the like).

At block 110 of the process 100, the multimodal monitoring system 50 may transform the extracted features of the feature space into one or more feature types (e.g., categorical, array, numerical, etc.). To transform the extracted features of the feature space, the multimodal monitoring system 50 may convert one or more feature types of the extracted features into a particular feature type. That is, the multimodal monitoring system 50 may transform features of a first data type into a second type. For example, features extracted from the visual data 102 may be of an array type while features extracted from the process data 104 may be of a categorical type. As such, the multimodal monitoring system 50 may transform the extracted features to reduce a complexity of the feature space.

At block 112 of the process 100, the multimodal monitoring system 50 may perform time synchronization of the extracted features within the feature space. In some embodiments, time synchronization of the extracted features within the feature space may be performed to associate a series of features to represent operation of the industrial automation equipment 58 in time. Such time synchronization may improve prediction of causal relationships between variables of the multimodal data. It should be noted, in some embodiments block 112 may be omitted from the process 100.

At block 114 of the process 100, the multimodal monitoring system 50 may perform feature selection of the feature space to reduce a dimensionality of the feature space. Feature selection may be performed by generating a new dimensional space by combining the extracted features of the visual data 102, the process data 104, and the production parameters 106 into one or more new variables. The new variables may have reduced dimensionality providing a simplified feature space (compared to the feature space generated at block 108). In some embodiments, feature selection may be performed based on making one or more inferences using causality in addition to and/or in alternative to performing principal component analysis, linear discriminant analysis, and the like. At block 116 of the process 100, the multimodal monitoring system 50 may output a multimodal feature space. The multimodal feature space may be based on the simplified feature space representative of the new variables representing the extracted features of the visual data 102, the process data 104, and the production parameters 106.

At block 118 of the process 100, the multimodal monitoring system 50 may validate the multimodal feature space. In some embodiments, validation of the multimodal feature space may include determining if the multimodal feature space includes all causal dependencies for any related number of variables within the multimodal data. That is, validation may be performed to ensure an appropriate data size is used to ensure interdependencies of the industrial automation equipment 58 may be detected. For example, the multimodal feature space may be probed using one or more known causal relationships to ensure causal dependencies are maintained in view of the feature selection of block 114 (e.g., reduction in dimensionality).

At block 120 of the process 100, the multimodal monitoring system 50 may determine if the multimodal feature space satisfies one or more metrics. The metrics may include one or more of the performance metrics as described herein. If the multimodal monitoring system 50 determines the multimodal feature space satisfies the one or more metrics, then the process 100 may proceed to block 122. However, if the multimodal monitoring system 50 determines that the multimodal feature space does not satisfy the one or more metrics, the process 100 may return to block 114. In some embodiments, validation of the feature space may be performed by comparing the known causal relationships to one or more outputs of a causal model applied within the multimodal feature space. The outputs of the causal model may be compared to one or more metrics to test a similarity of the outputs to the known causal relationships to determine if the multimodal feature space is robust enough to capture common relationships between features of the visual data 102, the process data 104, and the production parameters 106.

At block 122 of the process 100, the multimodal monitoring system 50 may output a validated multimodal feature space for use in building a causal model representative of the industrial automation equipment 58. The validated multimodal feature space may include sufficient data to predict causal behaviors between the visual data 102, the process data 104, and the production parameters 106 to enable formation of a causal graph and the causal model to predict impact in operation of the industrial automation equipment 58 on the target product.

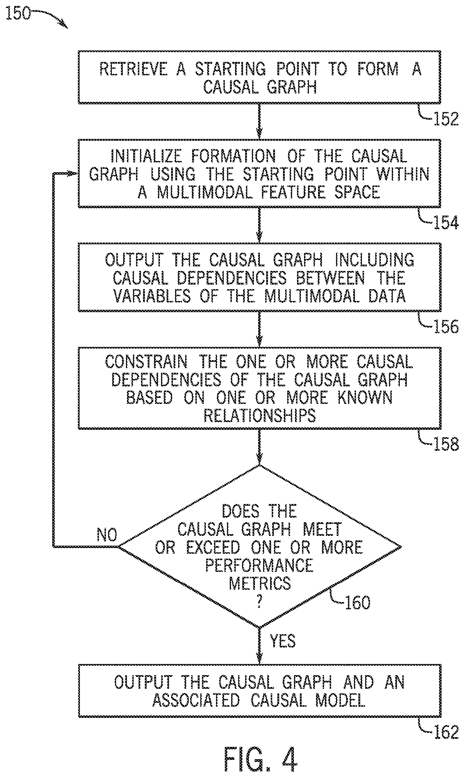

The multimodal monitoring system 50 may utilize the validated multimodal feature space to generate a visualization (e.g., a causal graph) that aids an operator in determining a target behavior of the industrial automation system 10. FIG. 4 is a flow diagram of a process 150 to generate a causal graph and an associated causal model, in accordance with aspects of the present techniques. The process 150 may be performed by the engines 80 (e.g., the feature extraction engine 82 and/or the causal inference engine 84) of the multimodal monitoring system 50, a computing device and/or a HMI 52 disclosed above with reference to FIG. 1 and FIG. 2 or any other suitable computing device(s) or controller(s). Furthermore, the blocks of the process 150 may be performed in the order disclosed herein or in any suitable order. For example, certain blocks of the process 150 may be performed concurrently. In addition, in certain embodiments, at least one of the blocks of the process 150 may be omitted.

At block 152 of the process 150, the multimodal monitoring system 50 may retrieve a starting point to form a causal graph. The starting point may be based on one or more known relationships of operation of the industrial automation equipment 58. For example, the starting point may be based on first principles reflective of the known relationships between process data, production parameters, and the like of industrial automation equipment. In some instances, known relationships may reflect physical laws such as heat transfer relationships, energy balance, mass balance, and/or one or more additional relationship. The starting point may constrain a number of relationships for the causal inference engine 84 to explore. In this manner, the multimodal monitoring system 50 may be tailored to a particular industrial automation system. For example, the starting point may include providing a known temperature relationship between a temperature of a particular silo 12 and the cooling tunnel 28 of FIG. 1. In this manner, the starting point may reduce a number or relationships for the causal inference engine 84 to explore as opposed to making assumptions leading to using computational bandwidth to explore relationships beyond physical operational parameters of the particular industrial automation system.

At block 154 of the process 150, the multimodal monitoring system 50 may initialize formation of the causal graph using the starting point within a multimodal feature space. In some embodiments, formation of the causal graph may include generating one or more nodes corresponding to the features of the multimodal feature space and one or more edges (e.g., arrows) corresponding to one or more causal dependencies between the features of the multimodal feature space. The causal graph may generate causal dependencies between the nodes using linear chains, branching forks, and/or merging colliders. As such, the causal graph may provide visualization of causal dependencies between the nodes. At block 156 of the process 150, the multimodal monitoring system 50 may output the causal graph including one or more causal dependencies between one or more variables of the multimodal data. The causal graph may include the causal dependencies based on or more patterns between one or more variables of the multimodal data (e.g., visual data, process data, production parameters, and the like).

At block 158 of the process 150, the multimodal monitoring system 50 may constrain the one or more causal dependencies of the causal graph based on one or more known relationships. Constraining the causal dependencies of the causal graph may be performed by specifying one or more relationships included in the causal graph. For example, it may be known (e.g., the memory 72 may store predetermined relationships between operational parameters of certain industrial automation equipment 58) that an operating speed of a conveyor 24 may be related to an operating speed of the depositor 22 of FIG. 1. As such, the causal dependency of the operating speed of the depositor 22 may be constrained as dependent on the operating speed of the conveyor 24. Constraining the causal graph may improve understandings of the causal model between causal dependencies by providing a framework corresponding to the industrial operation parameters of the industrial automation equipment 58.

At block 160 of the process 150, the multimodal monitoring system 50 may determine if the causal graph meets or exceeds one or more performance metrics. In some embodiments, the performance metrics may be based on score-based metrics, constraint-based metrics, or a combination thereof. In some embodiments, score-based metrics may use a score function to evaluate a quality of the causal graph. The score-based metrics may be used to find causal graphs that are not consistent with the multimodal data. Constraint-based metrics may use a set of constraints to evaluate the quality of the causal graph. In some embodiments, the causal graph may not meet or exceed the one or more performance metrics and may return to block 154 of the process 150. As such, formation of the causal graph may be an iterative process based on strengthening relationships between various variables of the multimodal data to establish the causal dependencies. In some embodiments, the causal graph may meet and/or exceed the performance metrics and proceed to block 162.

At block 162 of the process 150, the multimodal monitoring system 50 may output the causal graph and an associated causal model. The causal graph may be provided for visualization on a GUI and/or one or more displays (e.g., such as the display 76 of FIG. 2). The causal graph may be monitored to determine one or more causal dependencies of operating the industrial automation equipment 58. The associated causal model may be used to predict one or more impacts of change in operation of the industrial automation equipment 58 on a target behavior. For example, the target behavior may include forming a food product or a particular shape and color. In this manner, the causal model may receive the multimodal data during production of the target behavior (e.g., near real-time). Upon detection of a change in operation of the industrial automation equipment 58 a prediction may be generated to the change in the target behavior may be provided. For example, a change in operation of the speed of operation of the conveyor 24 (e.g., extracted from the process data) may lead to a change in a detected color (e.g., extracted from the visual data) of a product entering the cooling tunnel 28. As such, operational changes may be made based on the predicted change. For example, a cooling time of the product may be increased, such that the cooled product may be transported to the tray loader 30 at a predetermined temperature corresponding to the target product. In this manner, the multimodal monitoring system may reduce operational down time and provide dynamic production changes to ensure the target product is produced by the industrial automation equipment 58.

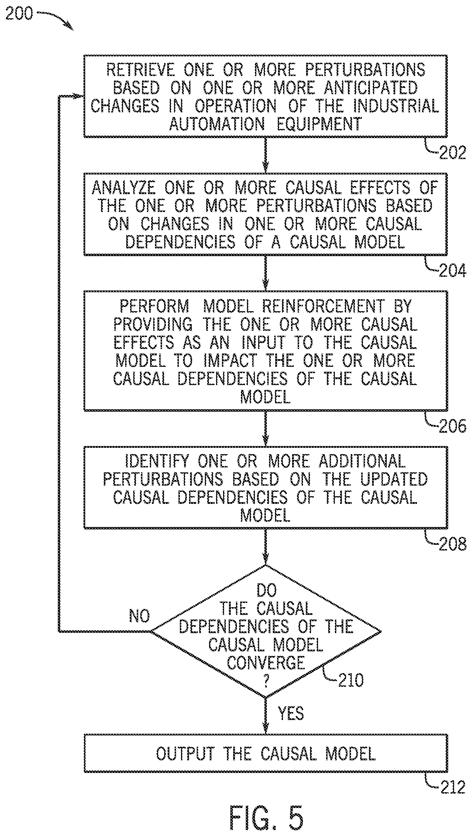

After the causal model is generated, it may be advantageous to determine causal effects of one or more features using perturbations. The perturbations may represent anticipated changes of the operation of the industrial automation equipment 52. FIG. 5 is a flow diagram of a process 200 of perturbing a causal model to determine one or more causal effects on the causal model, in accordance with aspects of the present techniques. The process 200 may be performed by the engines 80 (e.g., the feature extraction engine 82 and/or the causal inference engine 84) of the multimodal monitoring system 50, a computing device and/or a HMI 52 disclosed above with reference to FIG. 1 and FIG. 2 or any other suitable computing device(s) or controller(s). Furthermore, the blocks of the process 200 may be performed in the order disclosed herein or in any suitable order. For example, certain blocks of the process 200 may be performed concurrently. In addition, in certain embodiments, at least one of the blocks of the process 200 may be omitted.

At block 202 of the process 200, the multimodal monitoring system 50 may retrieve one or more perturbations based on one or more anticipated changes in operation of the industrial automation equipment 58. The perturbations may be representative of the anticipated changes in the operation of the industrial automation equipment 58. That is, the perturbations may represent one or more hypothetical events within the industrial automation system 10. At block 204 of the process 200, the multimodal monitoring system 50 may analyze one or more causal effects of the one or more perturbations based on changes in one or more causal dependencies of the causal model. In some embodiments, the causal inference engine 84 of the multimodal monitoring system 50 may perform counterfactual analysis to determine the causal effects of the perturbations of the causal dependencies represented in the causal model by creating and modeling one or more hypothetical scenarios. For example, the causal inference engine 84 may compare causal dependencies established upon modeling the hypothetical event to one or more causal dependencies representing one or more actual events represented in multimodal data. By modeling hypothetical scenarios, the causal inference engine 84 may establish causality by comparing hypothetical causal dependencies and actual causal dependencies.

In certain embodiments, the causal inference engine 84 may perform contribution analysis to determine the causal effects of the perturbations on causal dependences in the causal model. Contribution analysis may systemically evaluate how perturbations result in the one or more changes in operation of the industrial automation equipment 58 by understanding causal pathways and roles of one or more variables of the multidata data in such a change. In this manner, the causal inference engine 84 may provide understandings of how complex interventions to operations of the industrial automation equipment 58 impact the target product.

At block 206 of the process 200, the multimodal monitoring system 50 may perform model reinforcement by providing the one or more causal effects of the perturbations as an input to the causal model to impact the one or more causal dependencies of the causal model. For example, a weight of arrows of the causal graph may be weighted based on the causal effects. In this manner, the causal effects observed based on applying the perturbations to the causal model may be used as inputs to further train the causal graph to constrain the causal dependencies based on parameters of the industrial automation system 10. In this manner, the causal model may be reinforced and one or more updated causal dependences may be established to strength relationships of causal dependencies improving an ability of the causal model to generate predictions based on changes to the multimodal data.

At block 208 of the process 200, the multimodal monitoring system 50 may identify one or more additional perturbations based on the updated causal dependencies of the causal model. The one or more additional perturbations may be identified by the causal model based on the causal effects of the perturbations applied at block 204. The additional perturbations may include one or more changes to the causal model that may be likely to result in achieving a particular outcome such as producing the target behavior. In this manner, the causal inference engine 84 may identify particular perturbations that may lead to reinforcing causal dependencies that may provide an understanding of how variables of the multimodal data may lead to production of the target product.

At block 210 of the process 200, the multimodal monitoring system 50 may determine if the causal dependencies of the causal model converge. The causal inference engine 84 may compare a change in weights of the causal dependencies before and after the perturbations are applied to the causal model. In some embodiments, the multimodal monitoring system 50 may apply a convergence function to determine if the causal dependencies provided by the causal model coverage to a local value by comparing the convergence function output before and after perturbations and determine if a difference meets or exceeds a threshold. In this manner, the causal inference engine 84 of the multimodal monitoring system 50 may determine if an optimized causal model is established. In some embodiments, the multimodal monitoring system 50 may determine that the causal dependencies of the causal model do not converge and return to block 202 of the process 200. As such, blocks 202 to 208 and/or a portion of blocks 202 to 208 may be iteratively applied to perturb the causal model until convergence to an optimized output is achieved. In some embodiments, the multimodal monitoring system 50 may determine that the causal dependencies of the causal model converge and may proceed to block 212.

At block 212 of the process 200, the multimodal monitoring system 50 may output the causal model. The causal model may be used to predict how one or more changes in operation of the industrial automation equipment 58, represented by the extracted features within the feature space of the causal model, may impact production of the target product. In this manner, the causal model may reduce operational down time of the industrial automation equipment 58. It should be noted, inclusion of the features extracted from the visual data captured using vision as a sensor technologies may provide features to the causal model that are not present in process data, production parameters, and/or are non-obvious to operational users. Further, the extracted features from the visual data enable an adaptive and optimization-based protocol that may be updated based on changes to protocols of the industrial automation equipment 58. In this manner, the multimodal monitoring system 50 may anticipate impacts on the target product as a result in changes in operation of the industrial automation equipment 58 by leveraging multimodal data.

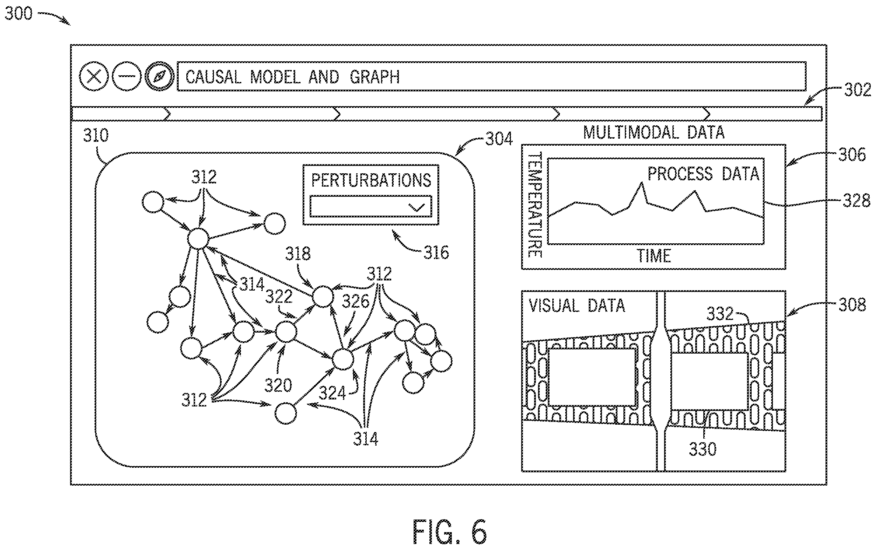

FIG. 6 is a schematic embodiment of a graphical user interface (GUI) 300 generated within the multimodal monitoring system 50 of FIG. 2, in in accordance with aspects of the present techniques. The multimodal monitoring system 50 may display the GUI 600 via a display 76 and/or one or more additional displays. The multimodal monitoring system 50 may display a screen 302 on the GUI 300 having one or more widgets 304, 306, 308 that may be used to visualize and provide information related to the visual data, the baseline, the clusters, and the like associated with outputs of the feature extraction engine 82 and/or the causal inference engine 84 of the multimodal monitoring system 50. In this manner, the multimodal monitoring system 50 may receive user inputs via the one or more widgets 304, 306, 308. The GUI 300 of the multimodal monitoring system 50 may provide alerts, notifications, status updates, user requests, flagged operations, operational recommendations, and the like.

In some embodiments, the widgets 304, 306, 308 of the multimodal monitoring system 50 include a directed graph widget 304, a process data widget 306, a visual data widget 308, and the like. The directed graph widget 304 includes a visualization of a causal graph 310 generated by the causal inference engine 84 of the multimodal monitoring system 50. The directed graph widget 304 may include one or more nodes 312 representative of one or more features extracted from multimodal data (e.g., visual data, process data, production parameters, and the like) and one or more arrows 314 representative of one or more causal dependencies of the features represented by the nodes 312. A perturbation input window 316 may be used to input one or more perturbations into the directed graph widget 303 to train the causal graph 310 and associated causal model. For example, a perturbation may include an anticipated change in operation of the industrial automation equipment 52, such as a change in temperature, a change in production speed, and the like. In this manner, a weight (e.g., a numerical value) of the arrows 314 may be impacted based on systematic perturbation of the causal graph. In some embodiments, the weight may represent a strength of connection between a pair of nodes. For example, a first node 318 and a second node 320 may be connected with a first arrow 322 of a first weight while the first node 318 and a third node 324 may be connected with a second arrow 326 with a second weight. The first weight may be greater than the second weight. As such, a strength of the causal dependency of the first node 318 and the second node 320 may be greater than the strength of the causal dependency of the first node 318 and the third node 324.

In certain embodiments, the process data widget 306 may include process data collected over a predetermined time by the sensors 16 of FIG. 1. As shown in the process data widget 306, the process data may include temperature data 328. For example, the process data may be used as a portion of the multimodal data represented by the causal graph 310. The feature extraction engine 82 may extract features from the temperature data 328 for use in the causal graph 310. The visual data widget 308 may include the visual data widget 308 may display video data from the one or more cameras 62 of FIG. 2. In some embodiments, the visual data widget 308 may display preprocessed data, filtered data, and the like. As shown, the visual data may be associated with one or more objects 330 moving on a conveyor belt 332. The feature extraction engine 82 may extract features from the visual data for use in the causal graph 310. In this manner, the visual data may be used as vision as sensor. The features from the visual data may be extracted from unlabeled video data of the objects 330 moving on the conveyor belt 332, such features may not be apparent to operational users. In the manner, the visual data may be used as a portion of the multimodal data and predict the one or more causal dependencies (e.g., causal relationships) between operational parameters and the target product.

The techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for [perform]ing [a function]..." or "step for [perform]ing [a function]...", it is intended that such elements are to be interpreted under 35 U.S.C. 112(f). However, for any claims containing elements designated in any other manner, it is intended that such elements are not to be interpreted under 35 U.S.C. 112(f).

While only certain features of the embodiments described herein have been illustrated and described, many modifications and changes will occur to those skilled in the art. It is, therefore, to be understood that the appended claims are intended to cover all such modifications and changes as fall within the true spirit of the embodiments described herein.

## Claims

1. A method comprising:
receiving visual data, process data, and production parameters indicative of operation of industrial automation equipment;
performing feature extraction of the visual data, the process data, and the production parameters to generate a plurality of features;
generating a feature space including a subset of the plurality of features;
building a causal model representing operation of industrial automation equipment within the feature space, wherein the causal model comprises one or more causal dependencies between one or more variables of the subset of the plurality of features; and
controlling operation of the industrial automation equipment based on the causal dependencies of the causal model.

2. The method of claim 1, wherein controlling the operation of the industrial automation equipment based on the casual dependencies of the casual model comprises:
receiving a target product operation of industrial automation equipment; and
using the causal model to predict one or more changes in operation of the industrial automation equipment impact the target product.

3. The method of claim 1 or 2, comprising transforming the plurality of features into one or more feature types.

4. The method of one of claims 1 to 3, comprising performing time synchronization of the plurality of features.

5. The method of one of claims 1 to 4, comprising:
performing feature selection to reduce a dimensionality of the feature space; and
validating the feature space to determine if the subset of the plurality of features captures one or more interdependencies associated with operation of the industrial automation equipment.

6. The method of one of claims 1 to 5, at least one of:
wherein the process data comprises drive data, vibration data, spectral data, quality data, or a combination thereof;
wherein the visual data comprises video data captured by one or more cameras;
the method comprising utilizing a causal inference engine to build the causal model and generate an associated causal graph;
the method comprising utilizing a feature extraction engine to perform extraction of the plurality of features from the visual data, the process data, and the production parameters; and
the method comprising providing a graphical user interface (GUI) configured to display the causal model as a causal graph and wherein the GUI is configured to display one or more arrows representative of the one or more causal dependencies within the causal graph.

7. A system, comprising:
one or more cameras configured to capture visual data associated with operations of industrial automation equipment;
a processing circuitry; and
a memory, accessible by the processing circuitry, the memory storing instructions that, when executed by the processing circuitry cause the processing circuitry to perform operations comprising:
receiving visual data from the one or more cameras, process data, and production parameters indicative of operation of industrial automation equipment;
performing feature extraction of the visual data, the process data, and the production parameters to generate a plurality of features;
generating a feature space including a subset of the plurality of features;
building a causal model representing operation of industrial automation equipment within the feature space, wherein the causal model comprises one or more causal dependencies between one or more variables of the subset of the plurality of features; and
controlling operation of the industrial automation equipment based on the causal dependencies of the causal model.

8. The system of claim 7, wherein the instructions, when executed, cause the processing circuitry to perform the operations comprising:
receiving a target product operation of industrial automation equipment; and
using the causal model to predict one or more changes in operation of the industrial automation equipment impact the target product.

9. The system of claim 7 or 8, at least one of:
wherein the instructions, when executed, cause the processing circuitry to perform the operations comprising transforming the plurality of features into one or more feature types; and
wherein the instructions, when executed, cause the processing circuitry to perform the operations comprising performing time synchronization of the plurality of features.

10. The system of one of claims 7 to 9, wherein the instructions, when executed, cause the processing circuitry to perform the operations comprising:
performing feature selection to reduce a dimensionality of the feature space; and
validating the feature space to determine if the subset of the plurality of features captures one or more interdependencies associated with operation of the industrial automation equipment.

11. The system of one of claims 7 to 10, wherein the instructions, when executed, cause the processing circuitry to perform the operations comprising providing a graphical user interface (GUI) configured to display the causal model as a causal graph and wherein the GUI is configured to display one or more arrows representative of the one or more causal dependencies within the causal graph.

12. A non-transitory computer-readable medium comprising computer-executable instructions that, when executed, are configured to cause a processor to perform operations comprising:
receiving visual data, process data, and production parameters indicative of operation of industrial automation equipment;
performing feature extraction of the visual data, the process data, and the production parameters to generate a plurality of features;
generating a feature space including a subset of the plurality of features;
building a causal model representing operation of industrial automation equipment within the feature space, wherein the causal model comprises one or more causal dependencies between one or more variables of the subset of the plurality of features; and
receiving a target product operation of industrial automation equipment;
using the causal model to predict one or more changes in operation of the industrial automation equipment impact the target product; and
controlling operations of the industrial automation equipment to produce the target product based on the one or more predicted changes.

13. The non-transitory computer-readable medium of claim 12, wherein the processor performs operations comprising:
performing feature selection to reduce a dimensionality of the feature space; and
validating the feature space to determine if the subset of the plurality of features captures one or more interdependencies associated with operation of the industrial automation equipment.

14. The non-transitory computer-readable medium of claim 12 or 13, wherein the processor performs operations comprising performing time synchronization of the plurality of features.

15. The non-transitory computer-readable medium of one of claims 12 to 14, wherein the processor performs operations comprising:
providing a graphical user interface (GUI) configured to display the causal model as a causal graph and wherein the GUI is configured to display one or more arrows representative of the one or more causal dependencies within the causal graph.
